# EUROPÄISCHE PATENTSCHRIFT

(11) **EP 2 739 493 B1**
(45) Veröffentlichungstag und Bekanntmachung des Hinweises auf die Patenterteilung: **10.04.2019**
(21) Anmeldenummer: 12743179.9
(22) Anmeldetag: 06.08.2012
(51) Int. Cl.: B60H 1/00, F28F 9/00, B23P 15/26

(54) **KRAFTFAHRZEUGKLIMAANLAGE**
MOTOR VEHICLE AIR CONDITIONING UNIT
CLIMATISATION DE VÉHICULE AUTOMOBILE

(30) Priorität: 05.08.2011 DE 102011080491
(43) Veröffentlichungstag der Anmeldung: 11.06.2014
(73) Patentinhaber: MAHLE Behr GmbH & Co. KG, 70469 Stuttgart (DE)
(72) Erfinder: DETTLING, Elke, 71679 Asperg (DE); FREY, Thomas, 73560 Böblingen (DE); FEITH, Thomas, 70825 Korntal-Münchingen (DE); DÜRR, Gottfried, 71640 Ludwigsburg (DE); RAIMANN, Joachim, 70825 Korntal-Münchingen (DE)
(74) Vertreter: Grauel, Andreas
(86) Internationale Anmeldenummer: PCT/EP2012/065321
(87) Internationale Veröffentlichungsnummer: WO 2013/020942

(56) Entgegenhaltungen:
- EP-A1- 2 058 156
- DE-A1- 19 753 562
- DE-U1- 29 913 414
- US-A- 4 465 124

## Beschreibung

Die vorliegende Erfindung betrifft eine Kraftfahrzeugklimaanlage gemäß dem Oberbegriff des Anspruches 1 und ein Verfahren zur Herstellung einer Kraftfahrzeugklimaanlage gemäß dem Oberbegriff des Anspruches 11.

Eine solche Klimaanlage ist aus der DE 299 13 414 U1 bekannt.

Kraftfahrzeugklimaanlagen dienen dazu, einem Fahrzeuginnenraum gekühlte und/oder erwärmte Luft zuzuführen. Hierzu umfasst die Kraftfahrzeugklimaanlage einen Kältemittelverdampfer zum Kühlen der Luft und eine Heizeinrichtung zum Erwärmen der Luft. Der Kältemittelverdampfer als auch die Heizeinrichtung sind dabei innerhalb eines Gehäuses der Kraftfahrzeugklimaanlage aus Kunststoff angeordnet und befestigt und werden von der zu kühlenden und/oder der zu erwärmenden Luft entsprechend durchströmt.

Der Kältemittelverdampfer umfasst dabei wenigstens zwei Sammelrohre, zwischen denen Flachrohre als Kühlrohre angeordnet sind. Die Enden der Kühlrohre enden dabei in den Sammelrohren und können dadurch mit Kältemittel durchströmt werden. Zwischen den Kühlrohren sind Kühlrippen angeordnet. Die Ausdehnung der Sammelrohre ist dabei größer als die Ausdehnung eines Rohrblockes, gebildet von den Kühlrohren und den Wellrippen. Beim Einbringen des Kältemittelverdampfers in einen Halteschlitz an dem Gehäuse muss deshalb die Ausdehnung des Halteschlitzes wenigstens der Ausdehnung der beiden Sammelrohre entsprechen, damit der Kältemittelverdampfer in die Halteschlitze eingeschoben werden kann. Um zu vermeiden, dass nach dem Einbringen des Kältemittelverdampfers in das Gehäuse Bypassluft den Kältemittelverdampfer außerhalb der beiden Sammelrohre umströmt, ist deshalb an den Seitenbereichen des Kältemittelverdampfers außerhalb der beiden Sammelrohre an den Kühlrohren jeweils ein Seitenteil aus Kunststoff zur zusätzlichen Abdichtung angeordnet. Diese Seitenteile aus Kunststoff zur Abdichtung müssen deshalb in aufwendiger Weise zunächst aus thermoplastischem Kunststoff mittels Spritzgießen hergestellt, anschließend an dem Kältemittelverdampfer befestigt werden vor dem Einbringen in das Gehäuse. Dadurch fallen in nachteiliger Weise hohe Kosten an bei der Herstellung der Kraftfahrzeugklimaanlage.

Die Aufgabe der vorliegenden Erfindung besteht deshalb darin, eine Kraftfahrzeugklimaanlage und ein Verfahren zur Herstellung einer Kraftfahrzeugklimaanlage zur Verfügung zu stellen, bei welcher der Kältemittelverdampfer mit einem geringen technischen Aufwand preiswert hinsichtlich Bypassluft abgedichtet ist.

Diese Aufgabe wird gelöst mit einer Kraftfahrzeugklimaanlage, gemäß Anspruch 1, umfassend ein Gehäuse, einen Wärmeübertrager, insbesondere einen Kältemittelverdampfer, mit wenigstens zwei Sammelrohren und zwischen den wenigstens zwei Sammelrohren nebeneinander angeordneten Kühlrohren, wobei die nebeneinander angeordneten Kühlrohre einen Rohrblock bilden, wobei die Ausdehnung der wenigstens zwei Sammelrohre senkrecht und/oder parallel zu einer von dem Rohrblock aufgespannten fiktiven Ebene außenseitig größer ist als die Ausdehnung des Rohrblockes, wobei das Gehäuse wenigstens eine im Wesentlichen parallel zu einer von dem Rohrblock aufgespannten fiktiven Ebene ausgerichtete H-Dichtrippe aufweist zur Abdichtung einer Vorder- und/oder Rückseite des Rohrblockes und/oder das Gehäuse wenigstens eine im Wesentlichen parallel zu einer von dem Kühlrohrblock aufgespannten fiktiven Ebene ausgerichtete V-Dichtrippe aufweist zur Abdichtung einer Vorder- und/oder Rückseite des Rohrblockes und die wenigstens eine H-Dichtrippe im Wesentlichen senkrecht zu der wenigstens einen V-Dichtrippe ausgerichtet ist. Mit der wenigstens einen H-Dichtrippe, die vorzugsweise horizontal ausgerichtet ist und der wenigstens einen V-Dichtrippe, die vorzugsweise vertikal ausgerichtet ist, kann der Rohrblock an einer Vorderseite, insbesondere einer Einströmseite zum Einleiten der Luft in den Kältemittelverdampfer, bezüglich Bypassluft im Wesentlichen abgedichtet werden. Im Wesentlichen bedeutet insbesondere mit einer Abweichung von weniger als 30°, 20°, 10° oder 5°.

Zweckmäßig ist der Wärmeübertrager eine Heizeinrichtung, z. B. eine Heizeinrichtung mit einer elektrischen Widerstandsheizeinrichtung oder ein von Kühlflüssigkeit für einen Verbrennungsmotor durchströmter Wärmeübertrager.

In einer ergänzenden Ausgestaltung liegt die wenigstens eine H-Dichtrippe auf dem Rohrblock, insbesondere der Vorderseite des Rohrblockes auf und/oder die wenigstens eine V-Dichtrippe liegt auf dem Rohrblock, insbesondere der Vorderseite des Rohrblockes auf.

In einer zusätzlichen Variante ist die wenigstens eine H-Dichtrippe in einem, vorzugsweise vertikalen, Schnitt im Wesentlichen senkrecht zu einer Achse der wenigstens zwei Sammelrohre und senkrecht zu einer von dem Rohrblock aufgespannten fiktiven Ebene in einem spitzen Winkel zu der fiktiven Ebene ausgerichtet. Der spitze Winkel liegt beispielsweise im Bereich zwischen 10° und 50°, insbesondere zwischen 10° und 30°. Der Schnitt ist somit im Wesentlichen senkrecht zu einer Achse der wenigstens zwei Sammelrohre und senkrecht zu einer von dem Rohrblock aufgespannten fiktiven Ebene ausgerichtet.

Zweckmäßig ist die wenigstens eine V-Dichtrippe in einem, vorzugsweise horizontalen, Schnitt im Wesentlichen parallel zu einer Achse der wenigstens zwei Sammelrohre und senkrecht zu einer von dem Rohrblock aufgespannten fiktiven Ebene im Wesentlichen senkrecht zu der fiktiven Ebene ausgerichtet. Im Wesentlichen senkrecht zu der fiktiven Ebene ausgerichtet bedeutet dabei, dass die wenigstens eine V-Dichtrippe in einem z. B. horizontalen Schnitt senkrecht zu einer von dem Rohrblock aufgespannten fiktiven Ebene mit einer Abweichung von weniger als 30°, 20°, 10° oder 5° senkrecht zu der fiktiven Ebene ausgerichtet ist. Der Schnitt ist somit im Wesentlichen parallel zu einer Achse der wenigstens zwei Sammelrohre und senkrecht zu einer von dem Rohrblock aufgespannten fiktiven Ebene ausgerichtet.

In einer zusätzlichen Ausführungsform ist die wenigstens eine H-Dichtrippe und/oder die wenigstens eine V-Dichtrippe und/oder wenigstens ein Gehäusesammelrohrabschnitt, insbesondere eine Rampen- oder Keilgeometrie, einteilig mit dem Gehäuse oder einem Gehäuseteil ausgebildet und/oder der Gehäusesammelrohrabschnitt, insbesondere die Rampen- oder Keilgeometrie, weist wenigstens eine Sollbruchstelle auf und/oder die wenigstens eine H-Dichtrippe ist im Wesentlichen parallel zu eine Achse der wenigstens zwei Sammelrohre und/oder im Wesentlichen horizontal ausgerichtet und/oder die wenigsten eine V-Dichtrippe ist im Wesentlichen senkrecht zu einer Achse der wenigstens zwei Sammelrohre und/oder ist im Wesentlichen vertikal ausgerichtet und/oder das Gehäuse ist zweiteilig, insbesondere mit einem Gehäuseoberteil und einem Gehäuseunterteil, ausgebildet und/oder das Gehäuse weist an wenigstens einem Gehäusesammelrohrabschnitt eine Geometrie auf, welche im Wesentlichen der außenseitigen Geometrie der wenigstens zwei Sammelrohre entspricht und der wenigstens eine Gehäusesammelrohrabschnitt liegt auf den wenigstens zwei Sammelrohren auf und insbesondere ist der wenigstens eine Gehäusesammelrohrabschnitt teilweise als Rampen- oder Keilgeometrie ausgebildet zum Bewegen des Wärmeübertragers, insbesondere Kältemittelverdampfers, in Richtung zu der wenigstens einen H-Dichtrippe und/oder zu der wenigstens einen V-Dichtrippe bei einem Einschieben des Wärmeübertragers, insbesondere Kältemittelverdampfers, in das Gehäuse, insbesondere ein Gehäuseteil. Bei einer einteiligen Ausbildung der wenigstens einen H-Dichtrippe und/oder der wenigstens einen V-Dichtrippe einteilig mit dem Gehäuse oder einem Gehäuseteil können die Kosten bei der Herstellung wesentlich reduziert werden, weil die wenigstens eine H- oder V-Dichtrippe beim Herstellen des Gehäuses mittels Spritzgießen aus thermoplastischem Kunststoff bereits mit hergestellt werden kann, sodass dadurch hier im Wesentlichen keine Kosten anfallen und außerdem auch bei der Herstellung keine gesonderten Teile an dem Wärmeübertrager, insbesondere Kältemittelverdampfer, z. B. Seitenteile, zu befestigen sind.

In einer ergänzenden Ausgestaltung umfasst die Kraftfahrzeugklimaanlage eine Heizeinrichtung zum Erwärmen der durch die Kraftfahrzeugklimaanlage geleiteten Luft und/oder die Kraftfahrzeugklimaanlage umfasst ein Gebläse und/oder einen Luftfilter und/oder die Kraftfahrzeugklimaanlage umfasst einen, vorzugsweise von dem Gehäuse begrenzten, Luftkanal und/oder die Kraftfahrzeugklimaanlage umfasst wenigstens eine Luftleiteinrichtung, insbesondere eine Luftklappe und/oder zwischen den Kühlrohren sind Wellrippen angeordnet.

Erfindungsgemäßes Verfahren zur Herstellung einer in dieser Schutzrechtsanmeldung in Anspruch 1 Kraftfahrzeugklimaanlage, mit den in Anspruch 11 beschriebenen Schritten: zur Verfügung stellen eines ersten Gehäuseteiles und eines zweiten Gehäuseteiles, zur Verfügung stellen eines Wärmeübertragers, insbesondere Kältemittelverdampfers, mit wenigstens zwei Sammelrohren und zwischen den wenigstens zwei Sammelrohren nebeneinander angeordneten Kühlrohren, wobei die nebeneinander angeordneten Kühlrohre einen Rohrblock bilden, wobei vorzugsweise die Ausdehnung der wenigstens zwei Sammelrohre senkrecht und/oder parallel zu einer von dem Rohrblock aufgespannten fiktiven Ebene außenseitig größer ist als die Ausdehnung des Rohrblockes, Einschieben des Wärmeübertragers, insbesondere Kältemittelverdampfers, in das erste Gehäuseteil, Einschieben des Kältemittelverdampfers in das zweite Gehäuseteil, wobei wenigstens ein Sammelrohr beim Einschieben des Wärmeübertragers, insbesondere Kältemittelverdampfers, in das erste Gehäuseteil und in das zweite Gehäuseteil an wenigstens einer H-Dichtrippe vorbei geschoben wird und anschließend der Wärmeübertrager, insbesondere Kältemittelverdampfer, in Richtung zu der wenigstens einen H-Dichtrippe bewegt wird vorzugsweise bis die wenigstens eine H-Dichtrippe auf dem Rohrblock aufliegt und wenigstens ein Sammelrohr beim Einschieben des Wärmeübertragers, insbesondere Kältemittelverdampfers, in das erste Gehäuseteil und in das zweite Gehäuseteil an wenigstens einer H-Dichtrippe oder an wenigstens einer V-Dichtrippe vorbei geschoben wird und anschließend der Wärmeübertrager, insbesondere Kältemittelverdampfer, in Richtung zu der wenigstens einen V-Dichtrippe bewegt wird vorzugsweise bis die wenigstens eine V-Dichtrippe auf dem Rohrblock aufliegt.

Vorzugsweise ist das erste Gehäuseteil ein Gehäuseunterteil und der Wärmeübertrager, insbesondere Kältemittelverdampfer, wird nach unten in das Gehäuseunterteil eingeschoben und/oder das zweite Gehäuseteil ist ein Gehäuseoberteil und der Wärmeübertrager, insbesondere Kältemittelverdampfer, wird in das Gehäuseoberteil eingeschoben, indem das Gehäuseoberteil zu dem Gehäuseunterteil bewegt wird.

In einer zusätzlichen Ausgestaltung wird der Wärmeübertrager, insbesondere Kältemittelverdampfer, in Richtung zu der wenigstens einen H-Dichtrippe und/oder zu der wenigstens einen V-Dichtrippe bewegt, indem eine Bewegung des Wärmeübertragers, insbesondere Kältemittelverdampfers, im Wesentlichen in Richtung von einer von dem Rohrblock aufgespannten fiktiven Ebene aufgrund einer Rampengeometrie an dem Gehäuseoberteil und/oder an dem Gehäuseunterteil umgelenkt wird.

In einer ergänzenden Variante wird der Wärmeübertrager, insbesondere Kältemittelverdampfer, am Ende des Einschiebens in das erste Gehäuseteil an einem Gehäusesammelrohrabschnitt aufgelegt und von dem Gehäusesammelrohrabschnitt formschlüssig gehalten und/oder der Wärmeübertrager, insbesondere Kältemittelverdampfer, wird am Ende des Einschiebens in das zweite Gehäuseteil an einem Gehäusesammelrohrabschnitt aufgelegt und von dem Gehäusesammelrohrabschnitt formschlüssig gehalten.

Im Nachfolgenden wird ein Ausführungsbeispiel der Erfindung unter Bezugnahme auf die beigefügten Zeichnungen näher beschrieben. Es zeigt:
- Fig. 1: einen vertikalen Schnitt eines Gehäuses mit einem Kältemittelverdampfer,
- Fig. 2: einen vertikalen Schnitt eines Gehäuseunterteils mit dem Kältemittelverdampfer beim Vorbeischieben zweier Sammelrohre an einer H-Dichtrippe,
- Fig. 3: einen vertikalen Schnitt des Gehäuseunterteils mit dem Kältemittelverdampfer gemäß Fig. 2 beim Vorbeischieben zweier Sammelrohre an einer H-Dichtrippe und einem Auflegen eines Sammelrohres auf eine Rampengeometrie,
- Fig. 4: einen vertikalen Schnitt des Gehäuseunterteils mit dem Kältemittelverdampfer gemäß Fig. 2 nach dem Auflegen zweier Sammelrohre an einem Gehäusesammelrohrabschnitt mit der Rampengeometrie,
- Fig. 5: einen vertikalen Schnitt eines Gehäuseoberteils mit dem Kältemittelverdampfer nach dem Vorbeischieben zweier Sammelrohre an der H-Dichtrippe,
- Fig. 6: eine Teilansicht des Gehäuseoberteils auf dem Kopf stehend mit der H-Dichtrippe und einer V-Dichtrippe und
- Fig. 7: eine Teilansicht des Gehäuseunterteils mit der H-Dichtrippe und einer V-Dichtrippe.

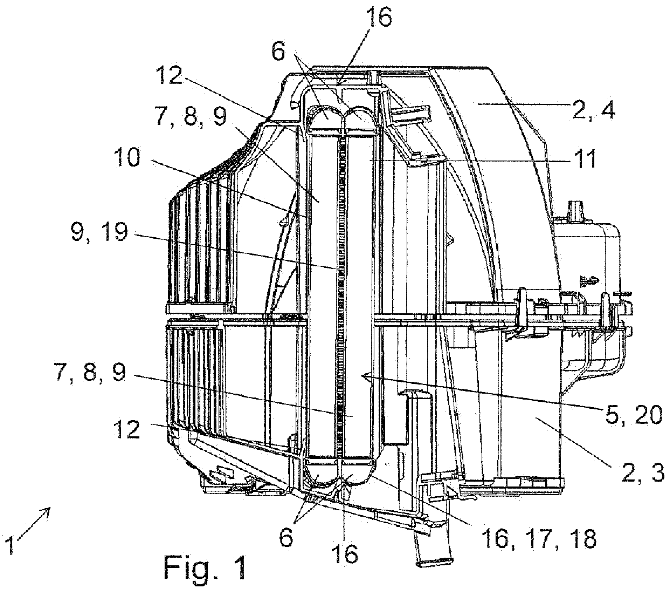

Eine in Fig. 1 dargestellte Kraftfahrzeugklimaanlage 1 dient dazu, dem Innenraum eines Kraftfahrzeugs gekühlte und/oder erwärmte Luft zuzuführen. Hierzu weist die Kraftfahrzeugklimaanlage 1 ein Gehäuse 2 auf, welches unter anderem Luftkanäle begrenzt. Dabei wird von einem nicht dargestellten Gebläse Luft aus der Umgebung oder dem Innenraum des Kraftfahrzeugs angesaugt, und anschließend an einem Kältemittelverdampfer 5 als Wärmeübertrager 20 gekühlt sowie an einer Heizeinrichtung erwärmt (nicht dargestellt).

Das Gehäuse 2 umfasst dabei ein Gehäuseunterteil 3 und ein Gehäuseoberteil 4 aus thermoplastischem Kunststoff. Der Kältemittelverdampfer 5 besteht wenigstens teilweise, insbesondere vollständig, aus Metall, insbesondere Aluminium, und ist mittels Löten in einem Lötofen hergestellt. An einer Oberseite des Kältemittelverdampfers 5 sind zwei horizontal ausgerichtete Sammelrohre 6 und an einer Unterseite des Kältemittelverdampfers 5 sind ebenfalls zwei horizontal ausgerichtete Sammelrohre 6 ausgebildet. Zwischen den beiden Sammelrohren 6 sind als Flachrohre 8 ausgebildete Kühlrohre 7 vorhanden, die in Öffnungen der Sammelrohre 6 fluiddicht abgedichtet sind, sodass Kältemittel von den Sammelrohren 6 in die Kühlrohre 7 ein- und ausströmen kann. Die Kühlrohre 7 sind dabei vertikal ausgerichtet und zwischen den Kühlrohren 7 sind Wellrippen 19 angeordnet. Die von dem Kältemittelverdampfer 5 zu kühlende Luft strömt dabei an einer Vorderseite 10 als Einströmseite ein und strömt an einer Rückseite 11 als Ausströmseite aus dem Kältemittelverdampfer 5 aus. Die Kühlrohre 7 sowie die Wellrippen 19 bilden dabei einen Rohrblock 9, weicher eine fiktive Ebene 14 aufspannt. Die Sammelrohre 6 weisen senkrecht und parallel zu der fiktiven Ebene 14 außenseitig eine größere Ausdehnung auf als der Rohrblock 9. Dabei ist die Ausdehnung beispielsweise auf jeder Seite im Bereich von 1 bis 2 mm größer, sodass die Sammelrohre 6 einen Überstand bezüglich des Rohrblockes 9 bilden.

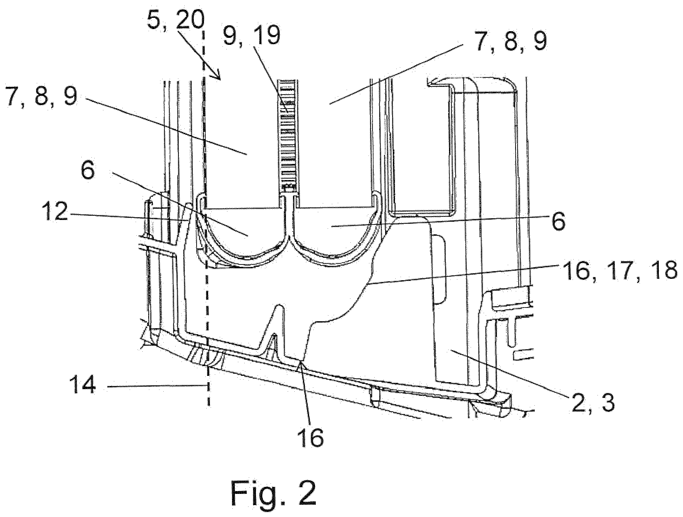

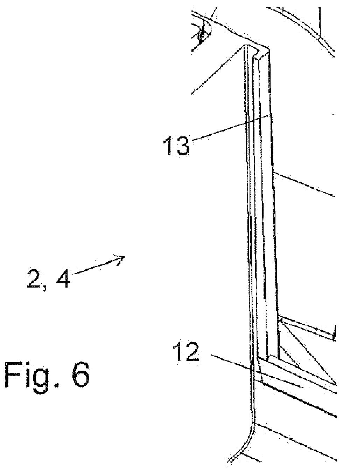

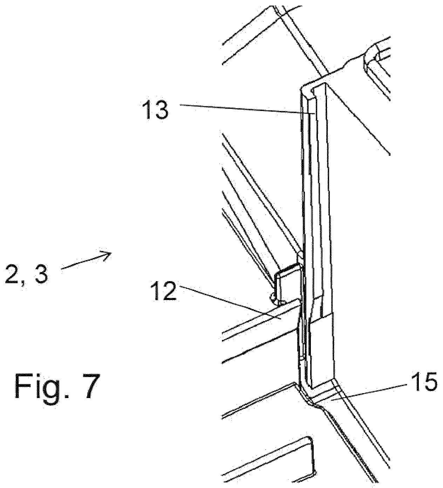

An dem Gehäuseunterteil 3 als auch an dem Gehäuseoberteil 4 ist jeweils eine horizontal ausgerichtete H-Dichtrippe 12 vorhanden. Die H-Dichtrippe 12 ist dabei in dem Schnitt gemäß der Darstellungen in den Fig. 2 bis 5 in einem spitzen Winkel zu der fiktiven Ebene 14 ausgerichtet. Ferner sind an dem Gehäuseunterteil 3 und dem Gehäuseoberteil 4 jeweils zwei V-Dichtrippen 13 vorhanden (Fig. 6 und 7). Die V-Dichtrippen 13 sind am seitlichen Endbereich des Rohrblockes 9 angeordnet, sodass die H-Dichtrippen 12 und die V-Dichtrippen 13 einen im Wesentlichen rechteckförmig vollständig umlaufenden Dichtrahmen bilden, welcher auf der Vorderseite 10 des Rohrblockes 9 aufliegt.

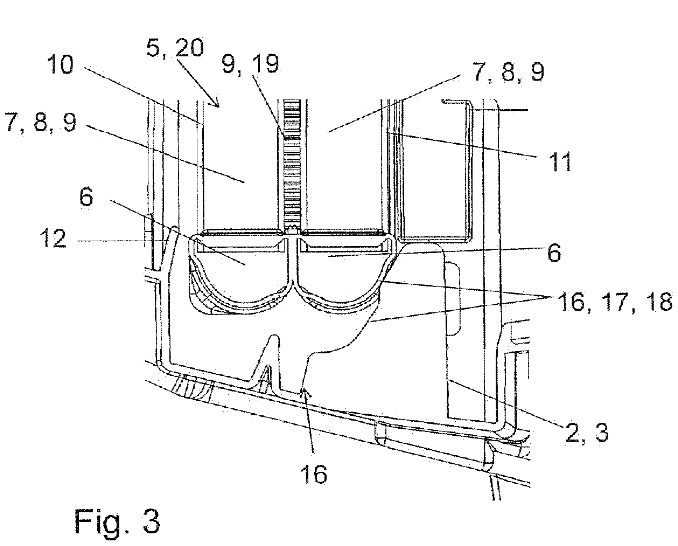

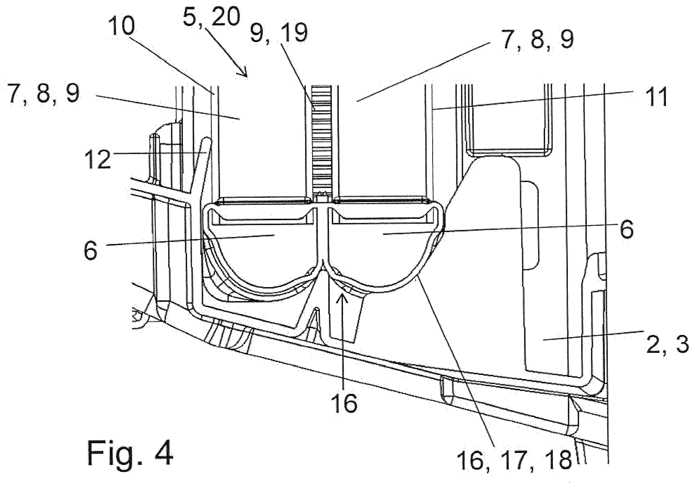

In den Fig. 2 bis 4 ist der Vorgang des Einschiebens des Kältemittelverdampfers 5 in das Gehäuseunterteil 3 dargestellt. In Fig. 2 werden die beiden unteren Sammelrohre 6 an der H-Dichtrippe 12 vorgeschoben. Dabei ist die Ausdehnung des Gehäuseunterteils 3 zwischen der H-Dichtrippe 12 und dem rechten Endbereich des rechten Sammelrohres 6 gerade ausreichend, um die Sammelrohre 6 hier durchzuschieben. Beim weiteren Schieben des Kältemittelverdampfers 5 nach unten, kommt das rechte Sammelrohr 6 (Fig. 3) auf einer Rampengeometrie 17 oder Keilgeometrie 18 eines Gehäusesammelrohrabschnittes 16 zur Auflage, Die Rampen- und Keilgeometrie 17, 18 wird von dem Gehäuseunterteil 3, insbesondere einem Gehäusesammelrohrabschnitt 16, gebildet. Aufgrund der Geometrie der Rampen- und Keilgeometrie 17, 18 wird beim weiteren Bewegen des Kältemittelverdampfers 5 nach unten der Kältemittelverdampfer 5 nach links in Richtung zu den H-Dichtrippen 12 bewegt. Eine derartige Bewegung ist möglich, weil gemäß der Darstellung in Fig. 4 die größeren Sammelrohre 6 bereits an der H-Dichtrippe 12 vorbeibewegt sind, sodass bei einer Bewegung des Kältemittelverdampfers 5 die H-Dichtrippe 12 unten auf der Vorderseite 10 des Rohrblockes 9 zur Auflage kommt. Bei dieser Bewegung des Kältemittelverdampfers 5 in Richtung zu der horizontal ausgerichteten H-Dichtrippe 12 kommen außerdem die vertikal ausgerichteten V-Dichtrippen 13 seitlich an der Vorderseite 10 zur Auflage. Der Gehäusesammelrohrabschnitt 16 weist dabei eine Geometrie auf, welche im Wesentlichen der Geometrie der Außenseite der beiden Sammelrohre 6 entspricht, sodass mit dem Gehäusesammelrohrabschnitt 16 der Kältemittelverdampfer 5 an den beiden unteren Sammelrohren 6 formschlüssig befestigbar ist.

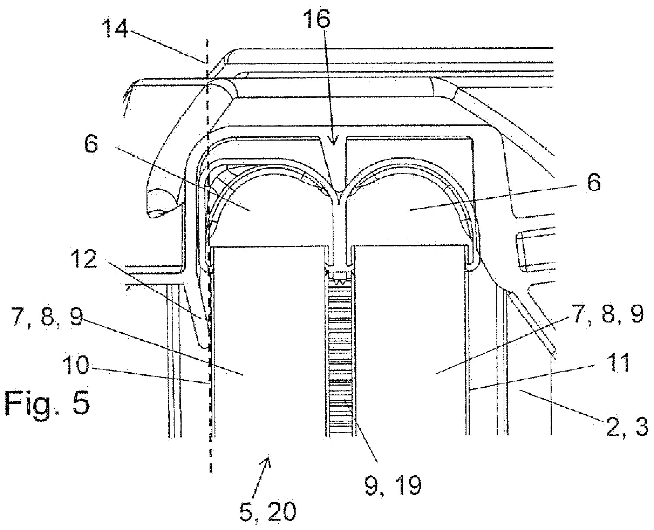

In Fig. 5 ist das Gehäuseoberteil 4 dargestellt. Beim Einschieben des Kältemittelverdampfers 5 in das Gehäuseoberteil 4, das dahingehend ausgeführt wird, dass das Gehäuseoberteil 4 auf den Kältemittelverdampfer 5 aufgeschoben wird, erfolgt ein ähnlicher Vorgang wie beim Einschieben des Kältemittelverdampfers 5 in das Gehäuseunterteil 3. Dabei ist der Kältemittelverdampfer 5 zunächst etwas schräg in das Gehäuseoberteil 4 einzuführen, damit die etwas größeren beiden oberen Sammelrohre 6 an der H-Dichtrippe 12 vorbeigeführt werden können. Anschließend wird der Kältemittelverdampfer 5 in Richtung zu der H-Dichtrippe 12 und den beiden V-Dichtrippen 13 bewegt, sodass die H-Dichtrippen 12 und die beiden seitlichen V-Dichtrippen 13 oberseitig bzw. seitlich an der Vorderseite 10 des Kühlerblockes 9 zur Auflage kommen. Der Kältemittelverdampfer 5 wird dabei ebenfalls mittels des Gehäusesammelrohrabschnittes 16 als Teil des Gehäuses 2 formschlüssig an den beiden Sammelrohren 6 gehalten.

Das Gehäuseunterteil 3 weist einen Kondenswasserablauf 15 auf, an dem die untere Hälfte des Dichtrahmens, gebildet von der H-Dichtrippe 12 und den beiden Hälften der V-Dichtrippen 13, geringfügig unterbrochen ist. Mittels des Kondenswasserablaufes 15 kann das sich am Kältemittelverdampfer 5 bildende Kondenswasser abgeleitet werden. Dabei ist die Öffnung an dem Kondenswasserablauf 15 sehr klein, sodass dadurch aufgrund des Kondenswasserablaufs 15 nur eine sehr kleine vernachlässigbare Menge an Bypassluft auftritt.

In einem weiteren, nicht dargestellten Ausführungsbeispiel weist der Gehäusesammelrohrabschnitt 16, insbesondere die Rampen- oder Keilgeometrie 17, 18, Sollbruchstellen auf. Es kann bei Kraftfahrzeugklimaanlagen 1 erforderlich sein, dass in der Kraftfahrzeugklimaanlage 1 unterschiedliche Kältemittelverdampfer 5 mit unterschiedlichen Kühlrohrblöcken 9 mit einer unterschiedlichen Ausdehnung senkrecht zu der fiktiven Ebene 14 zu befestigen sind. Bei einer Befestigung von einem Rohrblock 9 mit einer größeren Ausdehnung senkrecht zu der fiktiven Ebene 14 brauchen lediglich die Sollbruchstellen durchtrennt werden und anschließend kann der Kältemittelverdampfer 5 mit dem Rohrblock 9 mit einer größeren Tiefe an dem Gehäuse 2 befestigt werden, z. B. mit einer vorgehaltenen versetzten Rampen- oder Keilgeometrie 17, 18.

Insgesamt betrachtet sind mit der erfindungsgemäßen Kraftfahrzeugklimaanlage 1 wesentliche Vorteile verbunden. Die beiden H-Dichtrippen 12 und die beiden V-Dichtrippen 13 bilden einen die Vorderseite 10 des Rohrblockes 9 im Wesentlichen vollständig umlaufenden Dichtrahmen aus, sodass dadurch an dem Kältemittelverdampfer 5 im Wesentlichen keine dem Kältemittelverdampfer 5 umströmende Bypassluft auftritt. Die H- und V-Dichtrippen 12, 13 können einfach beim Spritzgießen des Gehäuseunterteils 3 und des Gehäuseoberteils 4 mit hergestellt werden, sodass keine aufwendigen Seitenteile, wie im Stand der Technik im seitlichen Bereich des Rohrblockes 9, zu befestigen sind.

### Bezugszeichenliste

- 1: Kraftfahrzeugklimaanlage
- 2: Gehäuse
- 3: Gehäuseunterteil
- 4: Gehäuseoberteil
- 5: Kältemittelverdampfer
- 6: Sammelrohr
- 7: Kühlrohr
- 8: Flachrohr
- 9: Rohrblock
- 10: Vorderseite
- 11: Rückseite
- 12: H-Dichtrippe
- 13: V-Dichtrippe
- 14: Fiktive Ebene
- 15: Kondenswasserablauf
- 16: Gehäusesammelrohrabschnitt
- 17: Rampengeometrie
- 18: Keilgeometrie
- 19: Wellrippe
- 20: Wärmeübertrager

## Patentansprüche

1. Kraftfahrzeugklimaanlage (1), umfassend
- ein Gehäuse (2),
- einen Wärmeübertrager (20) als Kältemittelverdampfer (5), mit wenigstens zwei Sammelrohren (6) und zwischen den wenigstens zwei Sammelrohren (6) nebeneinander angeordneten Rohren (7), wobei
- die nebeneinander angeordneten Rohre (7) einen Rohrblock (9) bilden, wobei
- die Ausdehnung der wenigstens zwei Sammelrohre (6) senkrecht und/oder parallel zu einer von dem Rohrblock (9) aufgespannten fiktiven Ebene (14) außenseitig größer ist als die Ausdehnung des Rohrblockes (9),
**dadurch gekennzeichnet, dass**
das Gehäuse (2) wenigstens eine im Wesentlichen parallel zu einer von dem Rohrblock (9) aufgespannten fiktiven Ebene (14) ausgerichtete H-Dichtrippe (12) aufweist zur Abdichtung einer Vorder- und/oder Rückseite (10, 11) des Rohrblockes (9) und das Gehäuse (2) wenigstens eine im Wesentlichen parallel zu einer von dem Rohrblock (9) aufgespannten fiktiven Ebene (14) ausgerichtete V-Dichtrippe (13) aufweist zur Abdichtung einer Vorder- und/oder Rückseite (10, 11) des Rohrblockes (9), wobei die wenigstens eine H-Dichtrippe (12) im Wesentlichen senkrecht zu der wenigstens einen V-Dichtrippe (13) ausgerichtet ist.

2. Kraftfahrzeugklimaanlage nach Anspruch 1, **dadurch gekennzeichnet, dass** die wenigstens eine H-Dichtrippe (12) auf dem Rohrblock (9), insbesondere der Vorderseite (10) des Rohrblockes (9), aufliegt und/oder die wenigstens eine V-Dichtrippe (13) auf dem Rohrblock (9), insbesondere der Vorderseite (10) des Rohrblockes (9), aufliegt.

3. Kraftfahrzeugklimaanlage nach Anspruch 1 oder 2, **dadurch gekennzeichnet, dass** die wenigstens eine H-Dichtrippe (12) in einem, vorzugsweise vertikalen, Schnitt senkrecht zu einer Achse der wenigstens zwei Sammelrohre (6) und senkrecht zu einer von dem Rohrblock (9) aufgespannten fiktiven Ebene (14) in einem spitzen Winkel zu der fiktiven Ebene (14) ausgerichtet ist.

4. Kraftfahrzeugklimaanlage nach einem oder mehreren der vorhergehenden Ansprüche, **dadurch gekennzeichnet, dass** die wenigstens eine V-Dichtrippe (13) in einem, vorzugsweise horizontalen, Schnitt parallel zu einer Achse der wenigstens zwei Sammelrohre und senkrecht zu einer von dem Rohrblock (9) aufgespannten fiktiven Ebene (14) im Wesentlichen senkrecht zu der fiktiven Ebene (14) ausgerichtet ist.

5. Kraftfahrzeugklimaanlage nach einem oder mehreren der vorhergehenden Ansprüche, **dadurch gekennzeichnet, dass** die wenigstens eine H-Dichtrippe (12) und die wenigstens eine V-Dichtrippe (13) und wenigstens ein Gehäusesammelrohrabschnitt (16), insbesondere eine Rampen- oder Keilgeometrie (17, 18), einteilig mit dem Gehäuse (2) oder einem Gehäuseteil (2, 3) ausgebildet ist.

6. Kraftfahrzeugklimaanlage nach einem oder mehreren der vorhergehenden Ansprüche, **dadurch gekennzeichnet, dass** der wenigstens eine Gehäusesammelrohrabschnitt (16), insbesondere die Rampen- oder Keilgeometrie (17, 18), wenigstens eine Sollbruchstelle aufweist.

7. Kraftfahrzeugklimaanlage nach einem oder mehreren der vorhergehenden Ansprüche, **dadurch gekennzeichnet, dass** die wenigstens eine H-Dichtrippe (12) im Wesentlichen parallel zu einer Achse der wenigstens zwei Sammelrohre (6) und im Wesentlichen horizontal ausgerichtet ist.

8. Kraftfahrzeugklimaanlage nach einem oder mehreren der vorhergehenden Ansprüche, **dadurch gekennzeichnet, dass** die wenigstens eine V-Dichtrippe (13) im Wesentlichen senkrecht zu einer Achse der wenigstens zwei Sammelrohre (6) und im Wesentlichen vertikal ausgerichtet ist.

9. Kraftfahrzeugklimaanlage nach einem oder mehreren der vorhergehenden Ansprüche, **dadurch gekennzeichnet, dass** das Gehäuse (2) zweiteilig, insbesondere mit einem Gehäuseoberteil (4) und einem Gehäuseunterteil (3), ausgebildet ist und das Gehäuse (2) an wenigstens einem Gehäusesammelrohrabschnitt (16) eine Geometrie aufweist, welche im Wesentlichen der außenseitigen Geometrie der wenigstens zwei Sammelrohre (6) entspricht und der wenigstens eine Gehäusesammelrohrabschnitt (16) auf den wenigstens zwei Sammelrohren (6) aufliegt und insbesondere der wenigstens eine Gehäusesammelrohrabschnitt (16) teilweise als Rampen- oder Keilgeometrie (17, 18) ausgebildet ist zum Bewegen des Wärmeübertragers (20), insbesondere Kältemittelverdampfers (5), in Richtung zu der wenigstens einen H-Dichtrippe (12) und zu der wenigstens einen V-Dichtrippe (13) bei einem Einschieben des Wärmeübertragers, insbesondere Kältemittelverdampfers (5), in das Gehäuse (2), insbesondere ein Gehäuseteil (3, 4).

10. Kraftfahrzeugklimaanlage nach einem oder mehreren der vorhergehenden Ansprüche, **dadurch gekennzeichnet, dass** die Kraftfahrzeugklimaanlage eine Heizeinrichtung zum Erwärmen der durch die Kraftfahrzeugklimaanlage geleiteten Luft umfasst und ein Gebläse und einen Luftfilter umfasst und einen, vorzugsweise von dem Gehäuse begrenzten, Luftkanal umfasst und wenigstens eine Luftleiteinrichtung, insbesondere eine Luftklappe, umfasst und zwischen den Kühlrohren (7) Wellrippen (19) angeordnet sind.

11. Verfahren zur Herstellung einer Kraftfahrzeugklimaanlage nach einem oder mehreren der vorhergehenden Ansprüche, mit den Schritten:
- zur Verfügung stellen eines ersten Gehäuseteiles (3) und eines zweiten Gehäuseteiles (4),
- zur Verfügung stellen eines Wärmeübertragers (20), insbesondere Kältemittelverdampfers (5), mit wenigstens zwei Sammelrohren (6) und zwischen den wenigstens zwei Sammelrohren (6) nebeneinander angeordneten Kühlrohren (7), wobei die nebeneinander angeordneten Kühlrohre (7) einen Rohrblock (9) bilden, wobei vorzugsweise die Ausdehnung der wenigstens zwei Sammelrohre (6) senkrecht und parallel zu einer von dem Rohrblock (9) aufgespannten fiktiven Ebene (14) außenseitig größer ist als die Ausdehnung des Rohrblockes (9),
- Einschieben des Wärmeübertragers (20), insbesondere Kältemittelverdampfers (5), in das erste Gehäuseteil (3),
- Einschieben des Wärmeübertragers (20), insbesondere Kältemittelverdampfers (5), in das zweite Gehäuseteil (4),
**dadurch gekennzeichnet, dass**
wenigstens ein Sammelrohr (6) beim Einschieben des Wärmeübertragers (20), insbesondere Kältemittelverdampfers (5), in das erste Gehäuseteil (3) und in das zweite Gehäuseteil (4) an wenigstens einer H-Dichtrippe (12) vorbei geschoben wird und anschließend der Wärmeübertrager (20), insbesondere Kältemittelverdampfer (5), in Richtung zu der wenigstens einen H-Dichtrippe (12) bewegt wird vorzugsweise bis die wenigstens eine H-Dichtrippe (12) auf dem Rohrblock (9) aufliegt und wenigstens ein Sammelrohr (6) beim Einschieben des Wärmeübertragers (20), insbesondere Kältemittelverdampfers (5), in das erste Gehäuseteil (3) und in das zweite Gehäuseteil (4) an wenigstens einer H-Dichtrippe (12) oder an wenigstens einer V-Dichtrippe (13) vorbei geschoben wird und anschließend der Wärmeübertrager (20), insbesondere Kältemittelverdampfer (5), in Richtung zu der wenigstens einen V-Dichtrippe (13) bewegt wird vorzugsweise bis die wenigstens eine V-Dichtrippe (13) auf dem Rohrblock (9) aufliegt.

12. Verfahren nach Anspruch 11, **dadurch gekennzeichnet, dass** das erste Gehäuseteil (3) ein Gehäuseunterteil (3) ist und der Wärmeübertrager (20), insbesondere Kältemittelverdampfer (5), nach unten in das Gehäuseunterteil (3) eingeschoben wird und/oder das zweite Gehäuseteil (4) ein Gehäuseoberteil (4) ist und der Wärmeübertrager (20), insbesondere Kältemittelverdampfer (5), in das Gehäuseoberteil (4) eingeschoben wird, indem das Gehäuseoberteil (4) zu dem Gehäuseunterteil (3) bewegt wird.

13. Verfahren nach Anspruch 11 oder 12, **dadurch gekennzeichnet, dass** der Wärmeübertrager (20), insbesondere Kältemittelverdampfer (5), in Richtung zu der wenigstens einen H-Dichtrippe (12) und/oder zu der wenigstens einen V-Dichtrippe (13) bewegt wird, indem eine Bewegung des Wärmeübertragers (20), insbesondere Kältemittelverdampfers (5), im Wesentlichen in Richtung von einer von dem Rohrblock (9) aufgespannten fiktiven Ebene (14) aufgrund einer Rampengeometrie (17) an dem Gehäuseoberteil (4) und/oder an dem Gehäuseunterteil (3) umgelenkt wird.

14. Verfahren nach einem oder mehreren der Ansprüche 11 bis 13, **dadurch gekennzeichnet, dass** der Wärmeübertrager (20), insbesondere Kältemittelverdampfer (5), am Ende des Einschiebens in das erste Gehäuseteil (3) an einem Gehäusesammelrohrabschnitt (16) aufgelegt und von dem Gehäusesammelrohrabschnitt (16) formschlüssig gehalten wird und/oder der Wärmeübertrager (20), insbesondere Kältemittelverdampfer (5), am Ende des Einschiebens in das zweite Gehäuseteil (4) an einem Gehäusesammelrohrabschnitt (16) aufgelegt und von dem Gehäusesammelrohrabschnitt (16) formschlüssig gehalten wird.

## Claims

1. A motor vehicle air conditioning unit (1), comprising
- a housing (2);
- a heat exchanger (20) as a refrigerant evaporator (5), with at least two manifolds (6) and tubes (7) disposed side by side between the at least two manifolds (6), wherein
- the tubes (7) disposed side by side form a tube block (9), wherein
- the extension of the at least two manifolds (6) perpendicular and/or parallel to an imaginary plane (14) spanned by the tube block (9) is greater on the outside than the extension of the tube block (9),
**characterised in that**
the housing (2) has at least one H-shaped sealing rib (12) oriented essentially parallel to an imaginary plane (14) spanned by the tube block (9) for sealing a front side and/or a rear side (10, 11) of the tube block (9), and the housing (2) has at least one V-shaped sealing rib (13) oriented essentially parallel to an imaginary plane (14) spanned by the tube block (9) for sealing a front side and/or a rear side (10, 11) of the tube block (9), wherein the at least one H-shaped sealing rib (12) is essentially oriented perpendicular to the at least one V-shaped sealing rib (13).

2. The motor vehicle air conditioning unit according to claim 1, **characterised in that** the at least one H-shaped sealing rib (12) rests on the tube block (9), in particular on the front side (10) of the tube block (9), and/or the at least one V-shaped sealing rib (13) rests on the tube block (9), in particular on the front side (10) of the tube block (9).

3. The motor vehicle air conditioning unit according to claim 1 or 2, **characterised in that** the at least one H-shaped sealing rib (12) is oriented in a preferably vertical section perpendicular to an axis of the at least two manifolds (6) and perpendicular to an imaginary plane (14) spanned by the tube block (9) at an acute angle to the imaginary plane (14).

4. The motor vehicle air conditioning unit according to one or more of the preceding claims, **characterised in that** the at least one V-shaped sealing rib (13) is oriented in a preferably horizontal section parallel to an axis of the at least two manifolds and perpendicular to an imaginary plane (14) spanned by the tube block (9), essentially perpendicular to the imaginary plane (14).

5. The motor vehicle air conditioning unit according to one or more of the preceding claims, **characterised in that** the at least one H-shaped sealing rib (12) and the at least one V-shaped sealing rib (13) and at least one housing manifold section (16), in particular a ramp or wedge geometry (17, 18), forms a single piece with the housing (2) or a housing part (2, 3).

6. The motor vehicle air conditioning unit according to one or more of the preceding claims, **characterised in that** the at least one housing manifold section (16), in particular the ramp or wedge geometry (17, 18), has at least one predetermined breaking point.

7. The motor vehicle air conditioning unit according to one or more of the preceding claims, **characterised in that** the at least one H-shaped sealing rib (12) is oriented essentially parallel to an axis of the at least two manifolds (6) and essentially horizontally.

8. The motor vehicle air conditioning unit according to one or more of the preceding claims, **characterised in that** the at least one V-shaped sealing rib (13) is oriented essentially perpendicular to an axis of the at least two manifolds (6) and/or essentially vertically.

9. The motor vehicle air conditioning unit according to one or more of the preceding claims, **characterised in that** the housing (2) is designed in two parts, in particular with a housing upper part (4) and a housing lower part (3), and the housing (2) has a geometry on at least one housing manifold section (16) which essentially matches the outer geometry of the at least two manifolds (6), and the at least one housing manifold section (16) rests on the at least two manifolds (6) and, in particular, the at least one housing manifold section (16) is partially designed as a ramp or wedge geometry (17, 18) for moving the heat exchanger (20), in particular the refrigerant evaporator (5), in the direction of the at least one H-shaped sealing rib (12) and of the at least one V-shaped sealing rib (13) when the heat exchanger, in particular the refrigerant evaporator (5), is inserted into the housing (2), in particular into a housing part (3, 4).

10. The motor vehicle air conditioning unit according to one or more of the preceding claims, **characterised in that** the motor vehicle air conditioning unit comprises a heater for heating the air conducted through the motor vehicle air conditioning unit, and comprises a blower and an air filter, and comprises an air duct which is preferably delimited by the housing, and comprises at least one air conducting device, in particular a damper, and corrugated ribs (19) are disposed between the cooling tubes (7).

11. A method for manufacturing a motor vehicle air conditioning unit according to one or more of the preceding claims, with the steps:
- providing a first housing part (3) and a second housing part (4),
- providing a heat exchanger (20), in particular a refrigerant evaporator (5), with at least two manifolds (6) and cooling tubes (7) disposed side by side between the at least two manifolds (6), wherein the cooling tubes (7) disposed side by side form a tube block (9), wherein preferably the extension of the at least two manifolds (6) perpendicular and parallel to an imaginary plane (14) spanned by the tube block (9) is greater on the outside than the extension of the tube block (9),
- inserting the heat exchanger (20), in particular the refrigerant evaporator (5), into the first housing part (3),
- inserting the heat exchanger (20), in particular the refrigerant evaporator (5), into the second housing part (4),
**characterised in that**
at least one manifold (6) is pushed past at least one H-shaped sealing rib (12) when the heat exchanger (20), in particular the refrigerant evaporator (5), is inserted into the first housing part (3) and into the second housing part (4), and the heat exchanger (20), in particular the refrigerant evaporator (5), is subsequently moved in the direction of the at least one H-shaped sealing rib (12), preferably until the at least one H-shaped sealing rib (12) rests on the tube block (9), and at least one manifold (6) is pushed past at least one H-shaped sealing rib (12) and at least one V-shaped sealing rib (13) when the heat exchanger (20), in particular the refrigerant evaporator (5), is inserted into the first housing part (3) and into the second housing part (4), and the heat exchanger (20), in particular the refrigerant evaporator (5), is subsequently moved in the direction of the at least one V-shaped sealing rib (13), preferably until the at least one V-shaped sealing rib (13) rests on the tube block (9).

12. The method according to claim 11, **characterised in that** the first housing part (3) is a housing lower part (3), and the heat exchanger (20), in particular the refrigerant evaporator (5), is inserted downward into the housing lower part (3), and/or the second housing part (4) is a housing upper part (4), and the heat exchanger (20), in particular the refrigerant evaporator (5), is inserted into the housing upper part (4) by moving the housing upper part (4) to the housing lower part (3).

13. The method according to claim 11 or 12, **characterised in that** the heat exchanger (20), in particular the refrigerant evaporator (5), is moved in the direction of the at least one H-shaped sealing rib (12) and/or of the at least one V-shaped sealing rib (13), **in that** a movement of the heat exchanger (20), in particular the refrigerant evaporator (5), is essentially deflected in the direction of an imaginary plane (14) spanned by the tube block (9) on the basis of a ramp geometry (17) on the housing upper part (4) and/or on the housing lower part (3).

14. The method according to one or more of claims 11 to 13, **characterised in that** the heat exchanger (20), in particular the refrigerant evaporator (5), is placed on a housing manifold section (16) and held in a form-locked manner by the housing manifold section (16) after being inserted into the first housing part (3), and/or the heat exchanger (20), in particular the refrigerant evaporator (5), is placed on a housing manifold section (16) and held in a form-locked manner by the housing manifold section (16) after being inserted into the second housing part (4) .

## Revendications

1. Système de climatisation d'un véhicule automobile (1), comprenant :
- un carter (2),
- un échangeur de chaleur (20) servant d'évaporateur de fluide frigorigène (5), comprenant au moins deux tubes collecteurs (6) et des tubes (7) disposés les uns à côté des autres entre les tubes collecteurs (6) au moins au nombre de deux,
- où les tubes (7) disposés les uns à côté des autres forment un bloc de tubes (9),
- où l'étendue des tubes collecteurs (6) au moins au nombre de deux, perpendiculairement et / ou parallèlement à un plan fictif (14) défini par le bloc de tubes (9), est plus grande extérieurement que l'étendue du bloc de tubes (9),
**caractérisé**
**en ce que** le carter (2) présente au moins une nervure d'étanchéité H (12) orientée pratiquement de manière parallèle à un plan fictif (14) défini par le bloc de tubes (9), ladite nervure d'étanchéité servant à assurer l'étanchéité d'une face avant et / ou arrière (10, 11) du bloc de tubes (9), et le carter (2) présente au moins une nervure d'étanchéité V (13) orientée pratiquement de manière parallèle à un plan fictif (14) défini par le bloc de tubes (9), ladite nervure d'étanchéité servant à assurer l'étanchéité d'une face avant et / ou arrière (10, 11) du bloc de tubes (9), où la nervure d'étanchéité H (12) au moins au nombre de un est orientée pratiquement de manière perpendiculaire à la nervure d'étanchéité V (13) au moins au nombre de un.

2. Système de climatisation d'un véhicule automobile selon la revendication 1, **caractérisé en ce que** la nervure d'étanchéité H (12) au moins au nombre de un est en appui sur le bloc de tubes (9), en particulier sur la face avant (10) du bloc de tubes (9), et / ou la nervure d'étanchéité V (13) au moins au nombre de un est en appui sur le bloc de tubes (9), en particulier sur la face avant (10) du bloc de tubes (9).

3. Système de climatisation d'un véhicule automobile selon la revendication 1 ou 2, **caractérisé en ce que** la nervure d'étanchéité H (12) au moins au nombre de un est orientée, dans une vue en coupe de préférence verticale, en étant perpendiculaire à un axe des tubes collecteurs (6) au moins au nombre de deux et en étant perpendiculaire à un plan fictif (14) défini par le bloc de tubes (9), suivant un angle aigu par rapport au plan fictif (14).

4. Système de climatisation d'un véhicule automobile selon l'une quelconque ou plusieurs des revendications précédentes, **caractérisé en ce que** la nervure d'étanchéité V (13) au moins au nombre de un est orientée, dans une vue en coupe de préférence horizontale, en étant parallèle à un axe des tubes collecteurs au moins au nombre de deux, et en étant perpendiculaire à un plan fictif (14) défini par le bloc de tubes (9), en étant pratiquement perpendiculaire au plan fictif (14).

5. Système de climatisation d'un véhicule automobile selon l'une quelconque ou plusieurs des revendications précédentes, **caractérisé en ce que** la nervure d'étanchéité H (12) au moins au nombre de un et la nervure d'étanchéité V (13) au moins au nombre de un et au moins une partie des tubes collecteurs formant carter (16), en particulier une géométrie en forme de rampe ou de coin (17, 18), sont configurées en formant une seule et même pièce avec le carter (2) ou avec une partie (2, 3) du carter.

6. Système de climatisation d'un véhicule automobile selon l'une quelconque ou plusieurs des revendications précédentes, **caractérisé en ce que** la partie des tubes collecteurs formant carter (16), au moins au nombre de un, en particulier la géométrie en forme de rampe ou de coin (17, 18), présente au moins un point destiné à la rupture.

7. Système de climatisation d'un véhicule automobile selon l'une quelconque ou plusieurs des revendications précédentes, **caractérisé en ce que** la nervure d'étanchéité H (12) au moins au nombre de un est orientée pratiquement de manière parallèle à un axe des tubes collecteurs (6) au moins au nombre de deux et en étant pratiquement horizontale.

8. Système de climatisation d'un véhicule automobile selon l'une quelconque ou plusieurs des revendications précédentes, **caractérisé en ce que** la nervure d'étanchéité V (13) au moins au nombre de un est orientée pratiquement de manière perpendiculaire à un axe des tubes collecteurs (6) au moins au nombre de deux et en étant pratiquement verticale.

9. Système de climatisation d'un véhicule automobile selon l'une quelconque ou plusieurs des revendications précédentes, **caractérisé en ce que** le carter (2) est configuré en deux parties, en particulier en ayant une partie supérieure de carter (4) et une partie inférieure de carter (3), et le carter (2) présente, sur au moins une partie des tubes collecteurs formant carter (16), une géométrie qui correspond pratiquement à la géométrie extérieure des tubes collecteurs (6) au moins au nombre de deux, et la partie des tubes collecteurs formant carter (16), au moins au nombre de un, est en appui sur les tubes collecteurs (6) au moins au nombre de deux, et en particulier la partie des tubes collecteurs formant carter (16), au moins au nombre de un, qui est configurée partiellement comme une géométrie en forme de rampe ou de coin (17, 18), sert au déplacement de l'échangeur de chaleur (20), en particulier de l'évaporateur de fluide frigorigène (5), en direction de la nervure d'étanchéité H (12) au moins au nombre de un et en direction de la nervure d'étanchéité V (13) au moins au nombre de un, lors d'une insertion de l'échangeur de chaleur, en particulier de l'évaporateur de fluide frigorigène (5), dans le carter (2), en particulier dans une partie (3, 4) du carter.

10. Système de climatisation d'un véhicule automobile selon l'une quelconque ou plusieurs des revendications précédentes, **caractérisé en ce que** le dispositif de climatisation du véhicule automobile comprend un dispositif de chauffage servant au chauffage de l'air dirigé à travers le système de climatisation du véhicule automobile, et comprend un pulseur et un filtre à air et comprend un conduit d'air, de préférence délimité par le carter, et comprend au moins un dispositif déflecteur d'air, en particulier un volet d'air, et des ailettes ondulées (19) sont disposées entre les tubes de refroidissement (7).

11. Procédé de fabrication d'un système de climatisation d'un véhicule automobile selon l'une quelconque ou plusieurs des revendications précédentes, ledit procédé comprenant les étapes consistant :
- à fournir une première partie de carter (3) et une seconde partie de carter (4),
- à fournir un échangeur de chaleur (20), en particulier un évaporateur de fluide frigorigène (5), comprenant au moins deux tubes collecteurs (6) et des tubes de refroidissement (7) disposés les uns à côté des autres entre les tubes collecteurs (6) au moins au nombre de deux, où les tubes de refroidissement (7) disposés les uns à côté des autres forment un bloc de tubes (9), où de préférence l'étendue des tubes collecteurs (6) au moins au nombre de deux, perpendiculaire et parallèle à un plan fictif (14) défini par le bloc de tubes (9), est plus grande extérieurement que l'étendue du bloc de tubes (9),
- à insérer l'échangeur de chaleur (20), en particulier l'évaporateur de fluide frigorigène (5), dans la première partie (3) du carter,
- à insérer l'échangeur de chaleur (20), en particulier l'évaporateur de fluide frigorigène (5), dans la seconde partie (4) du carter,
**caractérisé**
**en ce qu'**au moins un tube collecteur (6), lors de l'insertion de l'échangeur de chaleur (20), en particulier de l'évaporateur de fluide frigorigène (5), dans la première partie (3) du carter et dans la seconde partie (4) du carter, est poussé devant au moins une nervure d'étanchéité H (12) et, ensuite, l'échangeur de chaleur (20), en particulier l'évaporateur de fluide frigorigène (5), est déplacé en direction de la nervure d'étanchéité H (12) au moins au nombre de un, de préférence jusqu'à ce que la nervure d'étanchéité H (12) au moins au nombre de un vienne en appui sur le bloc de tubes (9), et au moins un tube collecteur (6), lors de l'insertion de l'échangeur de chaleur (20), en particulier de l'évaporateur de fluide frigorigène (5), dans la première partie (3) du carter et dans la seconde partie (4) du carter, est poussé devant au moins une nervure d'étanchéité H (12) ou devant au moins une nervure d'étanchéité V (13) et, ensuite, l'échangeur de chaleur (20), en particulier l'évaporateur de fluide frigorigène (5), est déplacé en direction de la nervure d'étanchéité V (13) au moins au nombre de un, de préférence jusqu'à ce que la nervure d'étanchéité V (13) vienne en appui sur le bloc de tubes (9).

12. Procédé selon la revendication 11, **caractérisé en ce que** la première partie (3) du carter est une partie inférieure (3) du carter et l'échangeur de chaleur (20), en particulier l'évaporateur de fluide frigorigène (5), est inséré, par le bas, dans la partie inférieure (3) du carter et / ou la seconde partie (4) du carter est une partie supérieure (4) du carter, et l'échangeur de chaleur (20), en particulier l'évaporateur de fluide frigorigène (5), est inséré dans la partie supérieure (4) du carter, tandis que la partie supérieure (4) du carter est déplacée vers la partie inférieure (3) du carter.

13. Procédé selon la revendication 11 ou 12, **caractérisé en ce que** l'échangeur de chaleur (20), en particulier l'évaporateur de fluide frigorigène (5), est déplacé en direction de la nervure d'étanchéité H (12) au moins au nombre de un et / ou en direction de la nervure d'étanchéité V (13) au moins au nombre de un, tandis qu'un déplacement de l'échangeur de chaleur (20), en particulier de l'évaporateur de fluide frigorigène (5), se produisant pratiquement en direction d'un plan fictif (14) défini par le bloc de tubes (9), est redirigé, en raison d'une géométrie en forme de rampe (17), sur la partie supérieure (4) du carter et / ou sur la partie inférieure (3) du carter.

14. Procédé selon l'une quelconque ou plusieurs des revendications 11 à 13, **caractérisé en ce que** l'échangeur de chaleur (20), en particulier l'évaporateur de fluide frigorigène (5), à la fin de l'insertion dans la première partie (3) du carter, est appliqué contre une partie des tubes collecteurs formant carter (16) et maintenu par complémentarité de forme par la partie des tubes collecteurs formant carter (16), et / ou l'échangeur de chaleur (20), en particulier l'évaporateur de fluide frigorigène (5), à la fin de l'insertion dans la seconde partie (4) du carter, est appliqué contre une partie des tubes collecteurs formant carter (16) et maintenu par complémentarité de forme par la partie des tubes collecteurs formant carter (16).
